# DEMANDE DE BREVET EUROPEEN

(11) **EP 4 818 856 A1**
(43) Date de publication de la demande: **07.10.2026**
(21) Numéro de dépôt: 26169461.6
(22) Date de dépôt: 31.03.2026
(51) Int. Cl.: G06F 3/01, G06V 20/20, G02B 27/01, G05B 19/418

(54) **SYSTEME DE REALITE MIXTE**

(30) Priorité: 03.04.2025 FR 2503497
(71) Demandeur: Avenria, 38330 Montbonnot-Saint-Martin (FR)
(72) Inventeur: LECOMTE, Guillaume, 38190 BERNIN (FR)
(74) Mandataire: Cabinet Beaumont

(57) **Abrégé**

La présente description concerne un système de réalité mixte (10) comprenant une table (20) comprenant une face supérieure (21) sur laquelle sont destinés à être posés des objets (60), et, comprenant des premières balises (24) et des deuxièmes balises (26) sur la face supérieure (21), au moins une première caméra (30) fixe par rapport à la table (20), un dispositif de commande (40) relié à la caméra fixe (30), et un dispositif mobile de réalité mixte (50) comprenant au moins une deuxième caméra.

## Description

### Domaine technique

La présente description concerne de façon générale un système de réalité mixte et un procédé de réalité mixte.

### Technique antérieure

La réalité mixte est la fusion de mondes réels et virtuels pour produire de nouveaux environnements et visualisations, où les objets physiques et numériques coexistent et peuvent interagir en temps réel. Elle inclut la réalité augmentée, mais va plus loin en permettant des interactions dynamiques entre les éléments réels et virtuels.

Un exemple d'application de la réalité mixte est l'aide à un utilisateur pour l'acquisition de compétences techniques, notamment l'apprentissage d'une activité manuelle, par l'affichage d'informations en réalité mixte alors que l'utilisateur est en train de manipuler des objets.

Pour afficher des informations en réalité mixte, un utilisateur est équipé d'un casque ou de lunettes de réalité mixte lui permettant de voir directement ou indirectement l'environnement réel, tout en y superposant des éléments virtuels interactifs. Ces dispositifs permettent une fusion dynamique entre le monde physique et des contenus numériques. Les informations affichées peuvent dépendre des objets manipulés par l'utilisateur. Dans ce but, un procédé de reconnaissance d'objet peut être mis en oeuvre. Toutefois, l'utilisateur peut cacher au moins partiellement un objets lorsqu'il le manipule ce qui peut faire échouer le procédé de reconnaissance d'objet.

### Résumé de l'invention

Un mode de réalisation pallie tout ou partie des inconvénients des systèmes et procédés de réalité mixte connus.

Un mode de réalisation prévoit un système de réalité mixte comprenant :
- une table comprenant une face supérieure sur laquelle sont destinés à être posés des objets, et, comprenant des premières balises et des deuxièmes balises sur la face supérieure ;
- au moins une première caméra fixe par rapport à la table ;
- un dispositif de commande relié à la caméra fixe ; et
- un dispositif mobile de réalité mixte comprenant au moins une deuxième caméra.

Selon un mode de réalisation, les deuxièmes balises sont des balises lumineuses commandées par le dispositif de commande.

Selon un mode de réalisation, le dispositif de commande est configuré pour faire fonctionner une intelligence artificielle entraînée à la reconnaissance des objets, à la reconnaissance des premières balises, et à la reconnaissance des deuxièmes balises.

Selon un mode de réalisation, le dispositif de commande et le dispositif mobile de réalité mixte comprennent des moyens de communication pour échanger des signaux entre eux.

Selon un mode de réalisation, chaque deuxième balise entoure complètement une zone correspondante de la face supérieure de la table sur laquelle est susceptible d'être posé l'un des objets.

Selon un mode de réalisation, les premières balises s'étendent selon deux premiers segments de droite parallèles et deux deuxièmes segments de droite parallèles.

Selon un mode de réalisation, les deux premiers segments de droite sont perpendiculaires aux deux deuxièmes segments de droite.

Selon un mode de réalisation, les deux premiers segments de droite ont des longueurs différentes et les deux deuxièmes segments de droite ont des longueurs différentes.

Un mode de réalisation prévoit également un procédé de réalité mixte utilisant le système de réalité mixte tel que défini précédemment, comprenant la mise en oeuvre d'une intelligence artificielle par le dispositif de commande pour reconnaître les premières balises, les deuxièmes balises, et les objets présents sur la table dans des images fournies par la première caméra et des images fournies par la deuxième caméra.

Selon un mode de réalisation, le procédé comprend les étapes suivantes :
- réception par le dispositif de commande d'images acquises par la première caméra et par la deuxième caméra ;
- mise en oeuvre d'une intelligence artificielle par le dispositif de commande pour reconnaître les premières balises et les deuxièmes balises dans les images fournies par la première caméra et les images fournies par la deuxième caméra ;
- détermination par le dispositif de commande de la position et l'orientation du dispositif mobile de réalité mixte par rapport à table à partir des dimensions et de l'orientation des premières balises et des deuxièmes balises dans les images fournies par la deuxième caméra ; et
- mise en oeuvre d'une intelligence artificielle par le dispositif de commande pour reconnaître chaque objet présent sur la table à partir des images fournies par la première caméra et les images fournies par la deuxième caméra en tenant compte de la position et l'orientation du dispositif mobile de réalité mixte par rapport à table.

Selon un mode de réalisation, le procédé comprend la transmission de signaux par le dispositif de commande au dispositif mobile de réalité mixte pour l'affichage de données en réalité mixte à un utilisateur.

Selon un mode de réalisation, les deuxièmes balises sont des balises lumineuses, le procédé comprenant la commande, par le dispositif de commande, de l'extinction d'au moins l'une des deuxièmes balises, et/ou de l'allumage d'au moins l'une des deuxièmes balises, et/ou de la modification de la couleur ou de l'intensité de la lumière émise par au moins l'une des deuxièmes balises en fonction d'une manipulation de l'un des objets par l'utilisateur.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une vue en perspective, partielle et schématique, d'un mode de réalisation d'un système de réalité mixte ;
la figure 2 est une vue de dessus, partielle et schématique, du système de réalité mixte de la figure 1 ;
la figure 3 et la figure 4 sont des vues en perspective, partielles et schématiques, de modes de réalisation d'un dispositif mobile de réalité mixte du système de réalité mixte de la figure 1 ;
la figure 5, la figure 6, la figure 7, la figure 8, et la figure 9 sont des vues de dessus de modes de réalisation d'une table du système de réalité mixte de la figure 1 ;
la figure 10 est un schéma-bloc illustrant un mode de réalisation d'un procédé de reconnaissance d'objets utilisant le système de réalité mixte de la figure 1 au cours d'une phase initiale du fonctionnement du système de réalité mixte ;
la figure 11 est un schéma-bloc illustrant un mode de réalisation d'un procédé de reconnaissance d'objets utilisant le système de réalité mixte de la figure 1 au cours d'une opération de manipulation d'un objet par un utilisateur ; et
la figure 12 est une vue en perspective, partielle et schématique, d'un mode de réalisation d'une installation de réalité mixte.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, le fonctionnement d'un casque de réalité mixte ou de lunettes de réalité mixte est bien connu de la personne du métier et n'est pas décrit en détail.

Dans la description qui suit, lorsque l'on fait référence à des qualificatifs de position absolue, tels que les termes « avant », « arrière », « haut », « bas », « gauche », « droite », etc., ou relative, tels que les termes « dessus », « dessous », « supérieur », « inférieur », etc., ou à des qualificatifs d'orientation, tels que les termes « horizontal », « vertical », etc., il est fait référence, sauf précision contraire, à l'orientation des figures ou à un système de réalité mixte dans une position normale d'utilisation.

Sauf précision contraire, les expressions « environ », « approximativement », « sensiblement », et « de l'ordre de » signifient à 10 % ou à 10° près, de préférence à 5 % ou à 5° près.

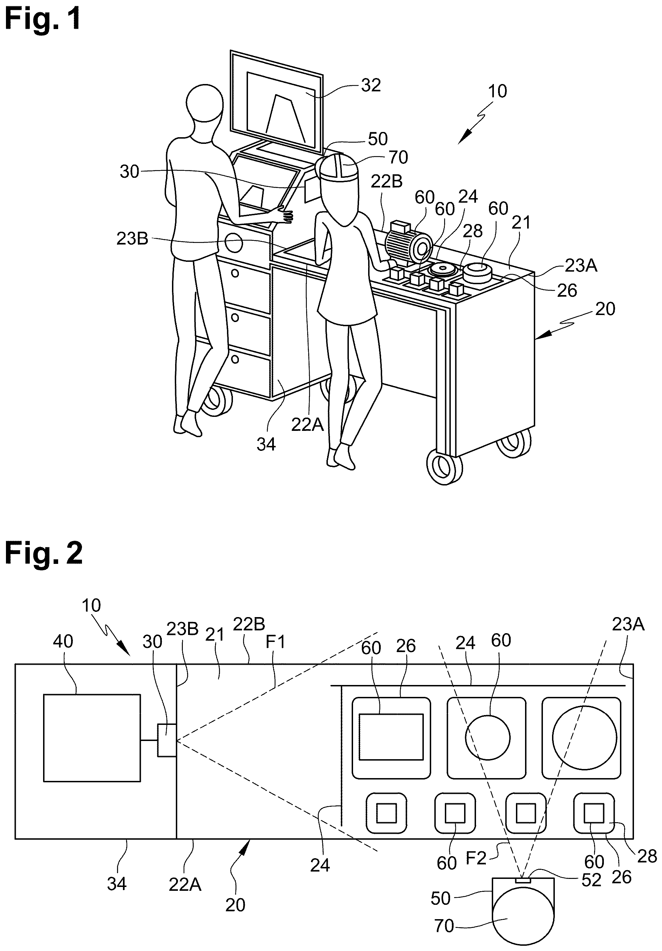

La figure 1 est une vue en perspective, partielle et schématique, d'un mode de réalisation d'un système de réalité mixte 10 et la figure 2 est une vue de dessus, partielle et schématique, du système de réalité mixte 10 de la figure 1.

Le système de réalité mixte 10 comprend :
- une table 20 comprenant une face supérieure 21 et, sur la face supérieure 21, des premières balises 24 et des deuxièmes balises 26 ;
- au moins une caméra 30 fixe par rapport à la table 20 ;
- un dispositif de commande 40, représenté schématiquement en figure 2, comprenant par exemple un microprocesseur, relié à la caméra fixe 30 ;
- un dispositif mobile de réalité mixte 50 comprenant au moins une caméra 52, représentée de façon schématique en figure 2.

Le dispositif de commande 40 et le dispositif mobile de réalité mixte 50 comprennent des moyens de communication pour échanger des signaux entre eux. Les moyens de communication peuvent être des moyens de communication par fil ou des moyens de communication sans fil.

Le système de réalité mixte 10 peut, en outre, comprendre une interface homme-machine 32, représentée sur la figure 1, comprenant par exemple un écran d'affichage, un clavier, des boutons, etc., reliée au dispositif de commande 40. Le système de réalité mixte 10 peut comprendre un meuble 34, disposé à côté de la table 20, contenant le dispositif de commande 40, et sur lequel est fixée la caméra fixe 30.

Des objets 60 sont destinés à être posés sur la face supérieure 21 de la table 20 et à être manipulés par un utilisateur 70 équipé du dispositif mobile de réalité mixte 50. Les premières balises 24 et les deuxièmes balises 26 sont à des positions fixes sur la face supérieure 21 de la table 20. Selon un mode de réalisation, chaque deuxième balise 26 entoure complètement une zone 28 correspondante de la face supérieure 21 de la table 20 sur laquelle est susceptible d'être posé l'un des objets 60.

Selon un mode de réalisation, chaque deuxième balise 26 est une balise lumineuse. Selon un mode de réalisation, chaque deuxième balise 26 est adaptée à émettre de la lumière dans le spectre visible. Selon un mode de réalisation, le dispositif de commande 40 est configuré pour commander l'allumage ou l'extinction des deuxièmes balises 26 et/ou pour commander la variation de la luminosité émise par les deuxièmes balises 26 et/ou pour commander une variation de la couleur de la lumière émise par les deuxièmes balises 26.

La caméra fixe 30 a un champ de vue F1 fixe tandis que la caméra 52 du dispositif mobile de réalité mixte 50 a un champ de vue F2 dont la position et l'orientation peuvent varier dans le temps. La caméra fixe 30 est orientée pour faire l'acquisition d'une image d'au moins une partie de la face supérieure 21 de la table de façon que, en l'absence d'objets 60 disposés sur la face supérieure 21 de la table 20, toutes les premières balises 24 et toutes les deuxièmes balises 21 se trouvent dans le champ de vue F1 de la caméra fixe 30. La caméra fixe 30 transmet les images dont elle fait l'acquisition au dispositif de commande 40.

Au cours de l'utilisation du système de réalité mixte 10, l'utilisateur 70 équipé du dispositif mobile de réalité mixte 50 est notamment amené à saisir un objet 60 posé sur une zone 28 et déplacer cet objet 60 jusqu'à une autre zone 28.

Le dispositif mobile de réalité mixte 50 et le dispositif de commande 40 sont configurés pour échanger des signaux entre eux. Le dispositif mobile de réalité mixte 50 est configuré pour transmettre au dispositif de commande 40 les images acquises par la caméra mobile 52. Le dispositif de commande 40 est configuré pour faire fonctionner une intelligence artificielle entraînée notamment à la reconnaissance des objets 60, à la reconnaissance des premières balises 24, et à la reconnaissance des deuxièmes balises 26. En particulier, dans le cas où chaque deuxième balise est une balise lumineuse qui peut être allumée ou éteinte indépendamment des autres deuxièmes balises 26 et/ou dont la couleur peut être modifiée indépendamment des autres deuxièmes balises 26, l'intelligence artificielle est entraînée à reconnaître les différentes configurations d'allumages et/ou d'extinctions, et/ou de variations de couleur des deuxièmes balises 26.

Le dispositif de commande 40 est en outre configuré pour transmettre des signaux au dispositif mobile de réalité mixte 50 à partir desquels le dispositif mobile de réalité mixte 50 affiche des images à l'utilisateur 70.

L'utilisateur voit la scène en réalité mixte, c'est-à-dire qu'il voit, en totalité ou en partie, la scène contenant les objets 60, de façon directe ou de façon indirecte via un écran d'affichage, et il voit des images virtuelles superposées à la scène. Les images virtuelles interactives dépendent de l'application visée. A titre d'exemple, une image virtuelle peut correspondre à un jumeau numérique de l'un des objets 60.

Un exemple d'application du système de réalité mixte 10 est l'aide à l'utilisateur 70 pour l'acquisition d'une compétence technique, notamment pour l'apprentissage d'une activité manuelle, par l'affichage d'informations en réalité mixte alors que l'utilisateur 70 est en train de manipuler les objets 60. Les informations affichées en réalité mixte visent notamment à guider l'utilisateur 70 lors de l'exécution d'un geste technique. Selon un exemple, pour l'acquisition d'une compétence technique dans le domaine de l'électricité, les objets 60 peuvent correspondre à des composants électriques individuels, un circuit électrique, ou un moteur électrique, et l'activité manuelle peut correspondre au changement d'un composant électrique. A titre d'exemple, une image virtuelle interactive superposée à la scène réelle peut représenter un jumeau numérique d'un moteur électrique. L'utilisateur peut interagir avec ce jumeau numérique, par exemple en affichant une vue éclatée du moteur pour visualiser ses composants internes, ou en s'exerçant à une manipulation virtuelle. Cette interaction permet ensuite de reproduire la même manipulation sur le moteur réel, en bénéficiant d'un guidage ou d'un lien direct avec l'image virtuelle. Selon un autre exemple, pour l'acquisition d'une compétence technique dans le domaine de la plomberie, les objets 60 peuvent correspondre à des composants séparés de plomberie, par exemple un tuyau, un tube, une vanne, un robinet, une soupape, une pompe, et l'activité manuelle peut correspondre au montage de plusieurs composants entre eux. De façon avantageuse, l'interaction entre l'utilisateur 70 et les objets 60 est réalisée de façon manuelle, sans intermédiaire, en particulier sans manette.

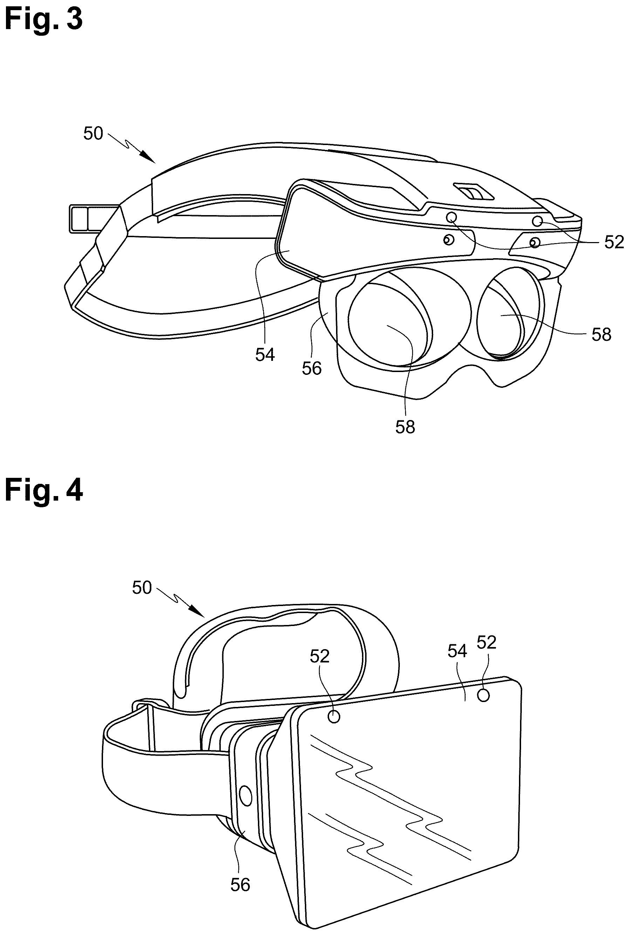

La figure 3 et la figure 4 sont des vues en perspective, partielles et schématiques, de modes de réalisation du dispositif mobile de réalité mixte 50. Dans le mode de réalisation représenté en figure 3, le dispositif mobile de réalité mixte 50 correspond à une paire de lunettes de réalité mixte. Dans le mode de réalisation représenté en figure 4, le dispositif mobile de réalité mixte 50 correspond à un casque de réalité mixte.

Dans ces modes de réalisation, le dispositif mobile de réalité mixte 50 comprend au moins un afficheur 54 et deux caméras 52 qui sont agencés sur un support 56 destiné à être porté par l'utilisateur 70, non représenté.

Dans le mode de réalisation de la figure 3, le dispositif mobile de réalité mixte 50 comprend deux écrans transparents 58 sur lesquels l'afficheur 54 est configuré pour projeter des images. L'utilisateur 70 voit directement la scène réelle au travers des écrans transparents 58 et voit les images de réalité virtuelle fournies par l'afficheur 54 superposées à la scène réelle.

Dans le mode de réalisation de la figure 4, l'utilisateur 70 ne voit pas directement la scène réelle. Le dispositif mobile de réalité mixte 50 fait l'acquisition d'images de la scène par les caméras 52 et l'afficheur 54 fournit une image de la scène à chaque oeil de l'utilisateur 70 sur laquelle sont ajoutées des images de réalité virtuelle interactives.

Le dispositif mobile de réalité mixte 50 peut en outre comprendre un dispositif de restitution de contenu sonore. Le dispositif de commande 40 peut être configuré pour transmettre des signaux au dispositif mobile de réalité mixte 50 et le dispositif de restitution de contenu sonore peut émettre un contenu sonore à destination de l'utilisateur 70 à partir des signaux reçus par le dispositif mobile de réalité mixte 50.

Selon un mode de réalisation, chaque première balise 24 s'étend selon une ligne rectiligne ou courbe. Selon un mode de réalisation, les premières balises 24 correspondent à des rainures réalisées dans la face supérieure 21 de la table 20. Selon un mode de réalisation, les premières balises 24 correspondent à des lignes lumineuses et/ou des lignes blanches ou colorées. Selon un mode de réalisation, les premières balises 24 s'étendent selon au moins deux segments de droite perpendiculaires.

Selon un mode de réalisation, chaque deuxième balise 26 s'étend selon une ligne rectiligne ou courbe. Selon un mode de réalisation, les deuxièmes balises 26 correspondent à des rainures réalisées dans la face supérieure 21 de la table. Selon un mode de réalisation, les deuxièmes balises 26 correspondent à des lignes lumineuses et/ou des lignes blanches ou colorées. Selon un mode de réalisation, chaque deuxième balise 26 s'étend selon une ligne lumineuse formant un contour fermé.

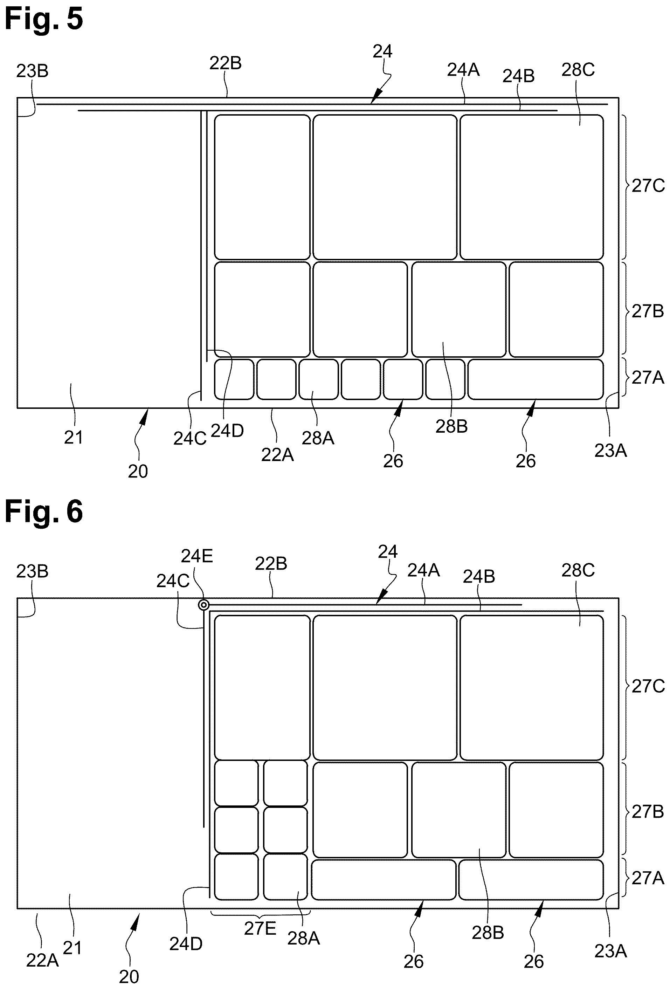

La figure 5, la figure 6, la figure 7, la figure 8, et la figure 9 sont des vues de dessus de modes de réalisation de la table 20 du système d'affichage de réalité mixte 10 de la figure 1.

Selon un mode de réalisation, la face supérieure 21 de la table 20 comprend un bord avant 22A, qui est le bord destiné à être le plus proche de l'utilisateur 70, un bord arrière 22B opposé au bord avant 22A, et des bords latéraux opposés 23A, 23B reliant le bord avant 22A au bord arrière 22B, le bord latéral 23A étant le bord latéral le plus éloigné de la caméra fixe 30, non représentée. Les deuxièmes balises 26 sont interposées entre au moins une première balise 24 et le bord avant 22A et entre une autre première balise 24 et le bord latéral 23A. Ceci permet de façon avantageuse que sensiblement la totalité des premières balises 24 soient en permanence visible par la caméra fixe 30.

Dans les modes de réalisation illustrés sur les figures 5 et 6, les premières balises 24 s'étendent selon deux premiers segments de droite 24A, 24B parallèles et deux deuxièmes segments de droite 24C, 24D parallèles. L'écart entre les deux premiers segments de droite 24A, 24B est compris entre 1 cm et 3,5 cm. L'écart entre les deux deuxièmes segments de droite 24C, 24D est compris entre 1 cm et 3,5 cm. Les deuxièmes segments de droite 24C, 24D sont orthogonaux aux premiers segments de droite 24A, 24B. Les longueurs des deux premiers segments de droite 24A, 24B sont différentes. Selon un mode de réalisation, les longueurs des deux deuxièmes segments de droite 24C, 24D sont différentes. Les longueurs des deux premiers segments de droite 24A, 24B sont comprises entre 90 cm et 130 cm. A titre d'exemple, la différence de longueur entre les deux premiers segments de droite 24A, 24B est compris entre 10 cm et 30 cm. Les longueurs des deux deuxièmes segments de droite 24C, 24D sont comprises entre 40 cm et 70 cm. A titre d'exemple, la différence de longueur entre les deux premiers segments de droite 24C, 24D est compris entre 5 cm et 15 cm.

Dans le mode de réalisation de la figure 6, les premières balises 24 comprennent en outre un élément circulaire 24E situé à la jonction du premier segment de droite 24, et du deuxième segment de droite 24C.

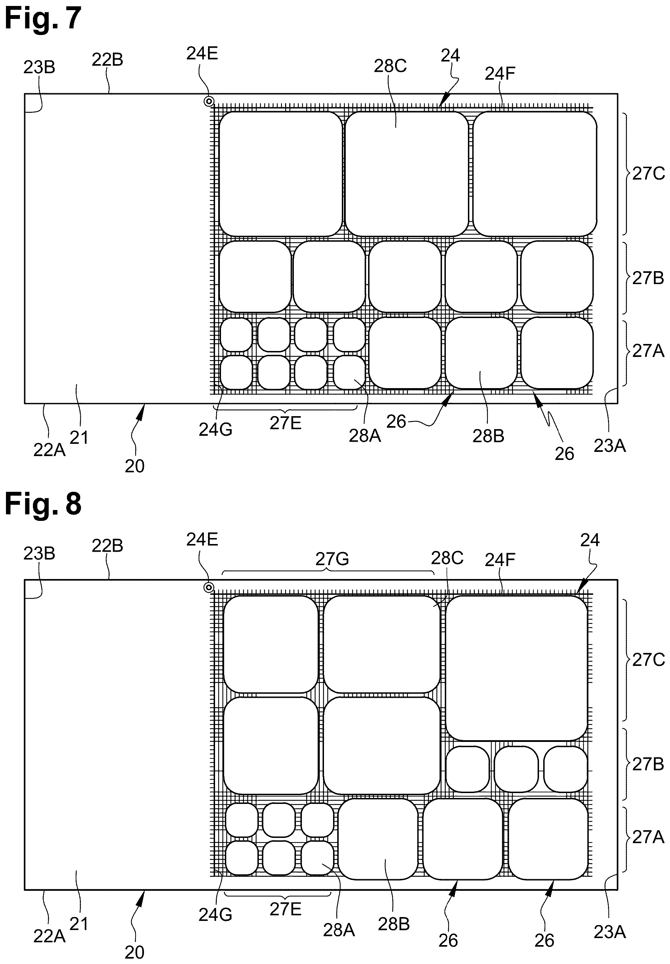

Dans les modes de réalisation illustrés sur les figures 7, 8 et 9, les premières balises 24 s'étendent selon deux segments de droite gradués 24F et 24G orthogonaux. Les graduations peuvent s'étendre selon des traits perpendiculaires aux segments de droite et espacés régulièrement.

Selon un mode de réalisation, chaque deuxième balise 26 suit la forme d'un rectangle ou d'un carré aux coins arrondis. Selon un mode de réalisation, les aires des zones 28 ne sont pas toutes égales. Selon un mode de réalisation, les zones 28 se répartissent en au moins des premières zones 28A de mêmes dimensions et ayant chacune une première aire, des deuxièmes zones 28B de mêmes dimensions et ayant chacune une deuxième aire supérieure strictement à la première aire, et des troisièmes zones 28C de mêmes dimensions et ayant chacune une troisième aire supérieure strictement à la deuxième aire. Toutefois, les zones 28 peuvent se répartir en plus de trois zones 28 de tailles différentes.

Dans le mode de réalisation de la figure 5, les deuxièmes balises 26 sont agencées sur la face supérieure 21 de la table 20 selon trois rangées 27A, 27B, 27C parallèles au bord avant 22A de la table 20. Pour chaque rangée 27A, 27B, 27C, les deuxièmes balises 26 de la rangée ont la même dimension, mesurée selon une direction perpendiculaire au bord avant 22A. La dimension, mesurée selon une direction perpendiculaire au bord avant 22A, des deuxièmes balises 26 de la rangée 27A la plus proche du bord avant 22A est inférieure à la dimension, mesurée selon une direction perpendiculaire au bord avant 22A, des deuxièmes balises 26 de la deuxième rangée 27B la plus proche du bord avant 22A et la dimension, mesurée selon une direction perpendiculaire au bord avant 22A, des deuxièmes balises 26 de la deuxième rangée 27B la plus proche du bord avant 22A est inférieure à la dimension, mesurée selon une direction perpendiculaire au bord avant, des deuxièmes balises 26 de la rangée 27C la plus éloignée du bord avant 22A. A titre d'exemple, certaines des deuxièmes balises 26 de la rangée 27A correspondent à un carrée à coins arrondis ayant un côté compris entre 5 cm et 10 cm, les deuxièmes balises 26 de la rangée 27B correspondent à un carrée à coins arrondis ayant un côté compris entre 15 cm et 25 cm, et les deuxièmes balises 26 de la rangée 27C correspondent à un carrée à coins arrondis ayant un côté compris entre 25 cm et 35 cm. Les dimensions des deuxièmes balises 26 peuvent toutefois être différentes de celles indiquées précédemment selon l'application visée.

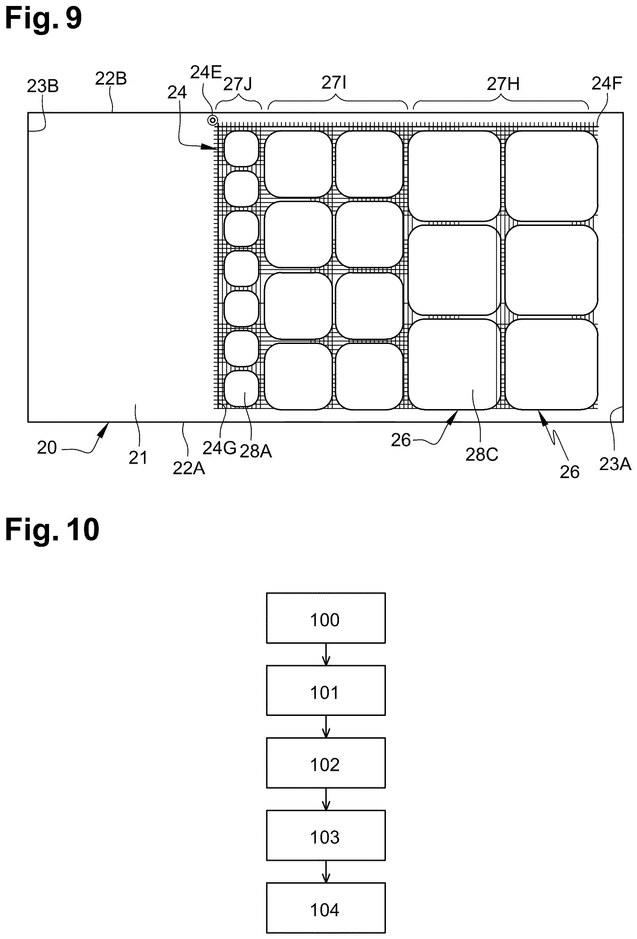

Dans le mode de réalisation de la figure 6, les deuxièmes balises 26 sont agencées sur la face supérieure 21 de la table 20 selon trois rangées 27A, 27B, 27C parallèles au bord avant 22A de la table 20 et également selon une matrice 27D de trois rangées parallèles au bord avant 22A et de deux colonnes perpendiculaires au bord avant 22A. Dans le mode de réalisation de la figure 7, les deuxièmes balises 26 sont agencées sur la face supérieure 21 de la table 20 selon trois rangées 27A, 27B, 27C parallèles au bord avant 22A de la table 20 et également selon une matrice 27E de deux rangées parallèles au bord avant 22A et de quatre colonnes perpendiculaires au bord avant 22A. Dans le mode de réalisation de la figure 8, les deuxièmes balises 26 sont agencées sur la face supérieure 21 de la table 20 selon trois rangées 27A, 27B, 27C parallèles au bord avant 22A de la table 20 et également selon une matrice 27F de deux rangées parallèles au bord avant 22A et de trois colonnes perpendiculaires au bord avant 22A et une matrice 27G de deux rangées parallèles au bord avant 22A et de deux colonnes perpendiculaires au bord avant 22A. Dans le mode de réalisation de la figure 9, les deuxièmes balises 26 sont agencées sur la face supérieure 21 de la table 20 selon une matrice 27H de trois rangées parallèles au bord avant 22A et de deux colonnes perpendiculaires au bord avant 22A, une matrice 27I de quatre rangées parallèles au bord avant 22A et de deux colonnes perpendiculaires au bord avant 22A et une colonne 27J.

En fonctionnement, lorsqu'un objet 60 est posé sur la table 20 dans une zone 28, l'objet est inscrit dans un prisme droit dont la base est contenue dans la zone 28.

La disposition des deuxièmes balises 26 illustré en figure 5 permet de façon avantageuse, lorsque les objets sont posés sur la face supérieure 21 de la table 20, que les objets volumineux 60 soient situées plus loin du bord avant 22A que les objets de plus petites dimensions et permet de réduire les risques que, en fonctionnement, les objets volumineux 60 ne cachent complètement des objets 60 de petites dimensions à la caméra fixe 30 ou à la caméra mobile 52.

La figure 10 est un schéma-bloc illustrant un mode de réalisation d'un procédé de reconnaissance des objets 60 par le système de réalité mixte 10.

A l'étape 100, le dispositif de commande 40 reçoit les images acquises par la caméra fixe 30 et par la caméra mobile 52. Le procédé se poursuit à l'étape 101.

A l'étape 101, le dispositif de commande 40 met en oeuvre une intelligence artificielle pour reconnaître les premières balises 24 et les deuxièmes balises 26 dans les images fournies par la caméra fixe 30. Dans le cas où la position de la caméra fixe 30 par rapport à la table 20 n'est pas susceptible de varier, les positions des premières balises 24 et les deuxièmes balises 26 par rapport à la caméra fixe 30 peuvent être mémorisées par le dispositif de commande 40 40 et l'étape 101 peut ne pas être présente. Le procédé se poursuit à l'étape 102.

A l'étape 102, le dispositif de commande 40 met en oeuvre une intelligence artificielle pour reconnaître les premières balises 24 et les deuxièmes balises 26 dans les images fournies par la caméra mobile 52. Seule une partie des premières balises 24 et seules certaines des deuxièmes balises 26 peuvent se trouver dans le champ de vue F2 de la caméra mobile 52. Le mode de réalisation dans lequel les premières balises 24 et/ou les deuxièmes balises 26 sont des balises lumineuses permet de façon avantageuse d'améliorer la reconnaissance des premières balises 24 et des deuxièmes balises 26 dans les images fournies par la caméra fixe 30 et la caméra mobil 52 indépendamment des conditions d'éclairement de la table 20. Le procédé se poursuit à l'étape 103.

A l'étape 103, le dispositif de commande 40 détermine la position et l'orientation du dispositif mobile de réalité mixte 50 par rapport à table 20 à partir des dimensions et de l'orientation des premières balises 24 et des deuxièmes balises 26 dans les images fournies par la caméra mobile 52. En particulier, dans le mode de réalisation selon lequel les premières balises 24 comprennent des segments de droite parallèles de longueurs différentes, la différence de longueur permet notamment de déterminer la distance entre le dispositif mobile de réalité mixte 50 et la table 20. Le procédé se poursuit à l'étape 104.

A l'étape 104, le dispositif de commande 40 met en oeuvre une intelligence artificielle pour reconnaître chaque objet 60 présent sur la table 20 à partir des images fournies par la caméra fixe 30 et des images fournies par la caméra mobile 52 en tenant compte de la position et l'orientation du dispositif mobile de réalité mixte 50 par rapport à table 20 pour l'exploitation des images fournies par le dispositif mobile de réalité mixte 50. Initialement, les objets 60 sont situées sur la face supérieure 21 de la table 20 dans les zones 28 délimitées par les deuxièmes balises 20 et l'utilisateur 70 ne touche pas les objets 60 de sorte que tous les objets 60 peut être reconnus par l'intelligence artificielle mise en oeuvre par le dispositif de commande 40.

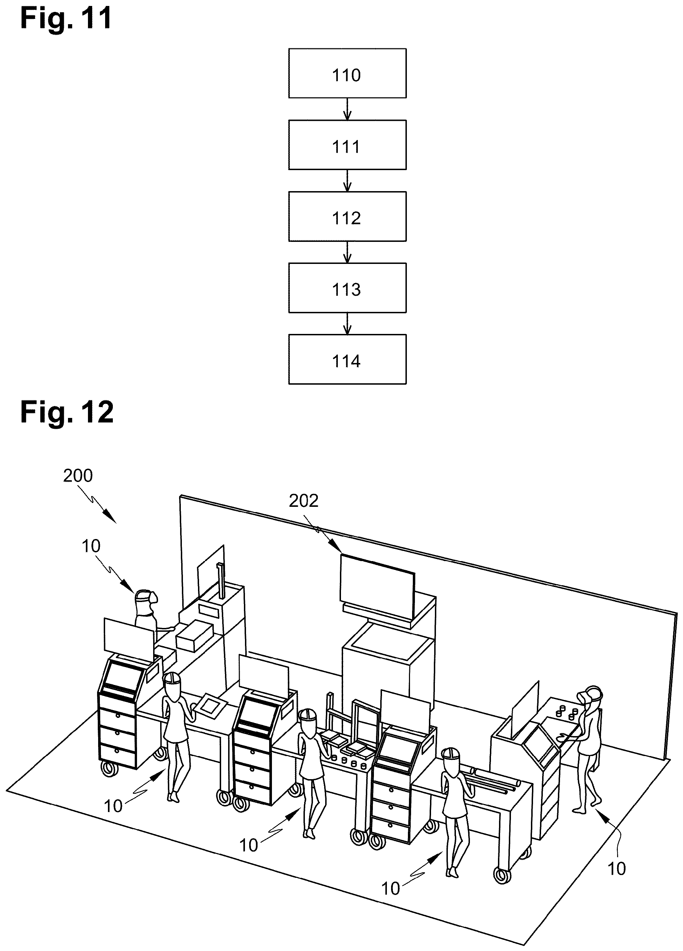

La figure 11 est un schéma-bloc illustrant un mode de réalisation d'un procédé de reconnaissance d'objets utilisant le système de réalité mixte 10 illustrant un exemple d'opération de manipulation de l'un des objets 60 par l'utilisateur 70 qui est équipé du dispositif mobile de réalité mixte 50.

A l'étape 110, le procédé décrit précédemment de reconnaissance d'objets décrit précédemment aux étapes 100 à 104 est mis en oeuvre et aboutit à la reconnaissance des objets 60 présents sur la face supérieure 21 de la table 20. Le procédé se poursuit à l'étape 111.

A l'étape 111, le dispositif de commande 40 transmet des signaux au dispositif mobile de réalité mixte 50 pour l'affichage de données en réalité mixte ou l'émission d'instructions sonores concernant la manipulation devant être réalisée par l'utilisateur 70. Ceci correspond par exemple au déplacement d'un objet 60 depuis une zone 28 initiale jusqu'une zone 28 finale. Le procédé se poursuit à l'étape 112.

A l'étape 112, l'utilisateur 70 saisit l'objet 60 avec ses mains. L'objet 60 peut alors ne plus être visible ou n'être que partiellement visible sur les images fournies par la caméra fixe 30 et les images fournies par la caméra mobile 52 de sorte que la reconnaissance de l'objet 60 en cours de manipulation par le dispositif de commande 40 peut ne pas être possible. Le procédé se poursuit à l'étape 113.

A l'étape 113, l'utilisateur 70 pose l'objet 60 dans la zone 28 finale. L'objet 60 redevient alors visible sur les images fournies par la caméra fixe 30 et les images fournies par la caméra mobile 52 de sorte que la reconnaissance de l'objet 60 en cours de manipulation par le dispositif de commande 40 est mise en oeuvre. Le procédé se poursuit à l'étape 114.

A l'étape 114, le dispositif de commande 40 détermine si la position et l'orientation de l'objet 60 sont celles attendues et transmet des signaux au dispositif mobile de réalité mixte 50 pour l'affichage de données en réalité mixte ou l'émission d'instructions sonores qui peuvent varier selon que la position et l'orientation de l'objet 60 sont correctes ou incorrectes. En outre, dans le cas où les deuxièmes balises 26 sont des balises lumineuses, le dispositif de commande 40 peut commander l'extinction d'une deuxième balise 26, et/ou l'allumage d'une deuxième balise 26, et/ou la modification de la couleur ou de l'intensité de la lumière émise par une deuxième balise 26 pour tenir compte de la manipulation effectuée par l'utilisateur 70.

La présence des premières balises 24 et des deuxièmes balises 26 permet, de façon avantageuse, de déterminer avec précision la position et l'orientation du dispositif mobile de réalité mixte 50 par rapport à table 20. Ceci permet de façon avantageuse d'afficher les images virtuelles interactives sur la scène en réalité mixte avec des positions relatives précises des images virtuelles par rapport à la scène.

La figure 12 est une vue en perspective, partielle et schématique, d'un mode de réalisation d'une installation d'affichage de réalité mixte 200. L'installation de réalité mixte 200 comprend plusieurs exemplaires du système de réalité mixte 10 représentée en figure 1, cinq exemplaires du système de réalité mixte 10 représentée en figure 1 étant représentés à titre d'exemple en figure 12.

Selon un mode de réalisation, les dispositifs de commande 40 des systèmes de réalité mixte 10 sont configurés pour échanger des signaux entre eux, et, pour chaque système de réalité mixte 10, les signaux transmis par le dispositif de commande 40 au dispositif mobile de réalité mixte 50 pour l'affichage de données en réalité mixte ou l'émission d'instructions sonores à l'utilisateur 70 peuvent varier en fonction des états dans lesquels se trouvent les autres systèmes de réalité mixte 10, par exemple en fonction des manipulations réalisées par les utilisateurs 70 des autres systèmes de réalité mixte 10.

Selon un mode de réalisation, l'installation d'affichage de réalité mixte 200 comprend un dispositif de commande central 202 et les dispositifs de commande 40 des systèmes de réalité mixte 10 sont configurés pour échanger des signaux avec le dispositif de commande central 202. Selon un mode de réalisation, le dispositif de commande central 202 supervise les dispositifs de commande 40 des systèmes de réalité mixte 10. Selon un mode de réalisation, le dispositif de commande central 202 est configuré pour mettre en oeuvre une intelligence artificielle.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en œuvre pratique des modes de réalisation et variantes décrits est à la portée de la personne du métier à partir des indications fonctionnelles données ci-dessus.

## Revendications

1. Système de réalité mixte (10) comprenant :
- une table (20) comprenant une face supérieure (21) sur laquelle sont destinés à être posés des objets (60), et, comprenant des premières balises (24) et des deuxièmes balises (26) sur la face supérieure (21) ;
- au moins une première caméra (30) fixe par rapport à la table (20) ;
- un dispositif de commande (40) relié à la caméra fixe (30) ; et
- un dispositif mobile de réalité mixte (50) comprenant au moins une deuxième caméra (52),
dans lequel les deuxièmes balises (26) sont des balises lumineuses commandées par le dispositif de commande (40), le dispositif de commande étant configuré pour commander l'extinction d'au moins l'une des deuxièmes balises (26), et/ou l'allumage d'au moins l'une des deuxièmes balises (26), et/ou la modification de la couleur ou de l'intensité de la lumière émise par au moins l'une des deuxièmes balises (26) en fonction d'une manipulation de l'un des objets (60) par un utilisateur (70).

2. Système selon la revendication 1, dans lequel le dispositif de commande (40) est configuré pour faire fonctionner une intelligence artificielle entraînée à la reconnaissance des objets (60), à la reconnaissance des premières balises (24), et à la reconnaissance des deuxièmes balises (26).

3. Système selon la revendication 1 ou 2, dans lequel le dispositif de commande (40) et le dispositif mobile de réalité mixte (50) comprennent des moyens de communication pour échanger des signaux entre eux.

4. Système selon l'une quelconque des revendications 1 à 3, dans lequel chaque deuxième balise (26) entoure complètement une zone (28) correspondante de la face supérieure (21) de la table (20) sur laquelle est susceptible d'être posé l'un des objets (60).

5. Système selon l'une quelconque des revendications 1 à 4, dans lequel les premières balises (24) s'étendent selon deux premiers segments de droite (24A, 24B) parallèles et deux deuxièmes segments de droite (24C, 24D) parallèles.

6. Système selon la revendication 5, dans lequel les deux premiers segments de droite (24A, 24B) sont perpendiculaires aux deux deuxièmes segments de droite (24C, 24D).

7. Système selon la revendication 5 ou 6, dans lequel les deux premiers segments de droite (24A, 24B) ont des longueurs différentes et dans lequel les deux deuxièmes segments de droite (24C, 24D) ont des longueurs différentes.

8. Installation d'affichage de réalité mixte (200) comprenant plusieurs systèmes de réalité mixte (10) selon l'une quelconque des revendications 1 à 7, reliés les uns aux autres.

9. Procédé de réalité mixte utilisant le système de réalité mixte (10) selon l'une quelconque des revendications 1 à 7, le procédé comprenant la commande, par le dispositif de commande (40), de l'extinction d'au moins l'une des deuxièmes balises (26), et/ou de l'allumage d'au moins l'une des deuxièmes balises (26), et/ou de la modification de la couleur ou de l'intensité de la lumière émise par au moins l'une des deuxièmes balises (26) en fonction d'une manipulation de l'un des objets (60) par l'utilisateur (70).

10. Procédé selon la revendication 9, comprenant la mise en oeuvre d'une intelligence artificielle par le dispositif de commande (40) pour reconnaître les premières balises (24), les deuxièmes balises (26), et les objets (60) présents sur la table (20) dans des images fournies par la première caméra (30) et des images fournies par la deuxième caméra (52).

11. Procédé selon la revendication 10, comprenant les étapes suivantes :
- réception par le dispositif de commande (40) d'images acquises par la première caméra (30) et par la deuxième caméra (52) ;
- mise en oeuvre d'une intelligence artificielle par le dispositif de commande (40) pour reconnaître les premières balises (24) et les deuxièmes balises (26) dans les images fournies par la première caméra (30) et les images fournies par la deuxième caméra (52) ;
- détermination par le dispositif de commande (40) de la position et l'orientation du dispositif mobile de réalité mixte (50) par rapport à table (20) à partir des dimensions et de l'orientation des premières balises (24) et des deuxièmes balises (26) dans les images fournies par la deuxième caméra (52) ; et
- mise en oeuvre d'une intelligence artificielle par le dispositif de commande (40) pour reconnaître chaque objet (60) présent sur la table (20) à partir des images fournies par la première caméra (30) et les images fournies par la deuxième caméra (52) en tenant compte de la position et l'orientation du dispositif mobile de réalité mixte (50) par rapport à table (20).

12. Procédé selon la revendication 10 ou 11, comprenant la transmission de signaux par le dispositif de commande (40) au dispositif mobile de réalité mixte (50) pour l'affichage de données en réalité mixte à un utilisateur (70).
